# EUROPEAN PATENT SPECIFICATION

(11) **EP 1 402 375 B1**
(45) Date of publication and mention of the grant of the patent: **08.09.2010**
(21) Application number: 01992238.4
(22) Date of filing: 28.12.2001
(51) Int. Cl.: H04L 29/06

(54) **WEB PAGE ANNOTATION SYSTEMS**
WEBSEITEN-ANNOTATIONSSYSTEME
SYSTEMES D'ANNOTATION DE PAGES WEB

(30) Priority: 04.05.2001 EP 01810439
(43) Date of publication of application: 31.03.2004
(73) Proprietor: International Business Machines Corporation, Armonk, NY 10504 (US)
(72) Inventor: STOLZE, Markus, CH-8134 Adliswil (CH)
(74) Representative: Klett, Peter Michael
(86) International application number: PCT/US2001/049641
(87) International publication number: WO 2002/091193

(56) References cited:
- EP-A- 1 061 465
- WO-A-00/04434
- US-A- 5 999 929
- US-A- 6 134 532
- US-B1- 6 182 072
- US-B1- 6 185 614
- US-B1- 6 237 035
- US-B1- 6 243 750
- US-B1- 6 253 204
- GALLAGHER K ET AL: "A framework for targeting banner advertising on the Internet" SYSTEM SCIENCES, 1997, PROCEEDINGS OF THE THIRTIETH HWAII INTERNATIONA L CONFERENCE ON WAILEA, HI, USA 7-10 JAN. 1997, LOS ALAMITOS, CA, USA,IEEE COMPUT. SOC, US, vol. 4, 7 January 1997 (1997-01-07), pages 265-274, XP010271845 ISBN: 978-0-8186-7743-4
- SCHLOSS R J: "Novel business uses of independently created hyperlinks in the World Wide Web: basic mechanism and examples" PROCEEDINGS OF THE ANNUAL HAWAII INTERNATIONAL CONFERENCE ONSYSTEM SCIENCES, XX, XX, vol. 2, 3 January 1996 (1996-01-03), pages 137-146, XP002151364

## Description

### Technical Field

This invention relates generally to annotation of web pages. Embodiments of the invention provide methods and apparatus for annotating web pages retrieved from the Internet for display at a user station.

### Background Art

Annotation of web pages is performed to provide a user viewing the web pages with access to additional information over and above the basic web page content supplied by the web page provider. Various types of web page annotation system are known in the art, the nature of the additional information provided as annotations varying according to the objectives of the particular system. One example of an annotation service is provided by Annotate.Net (www.annotate.net). Users access this service by downloading an application which plugs into the user's web browser. When viewing web pages retrieved from the Internet, this application presents the user with links to related web-pages of "annotators" participating in the service. Thus, when viewing a particular page, the application may indicate that a number of annotators have web-pages related to this page. If the user clicks on any of the links presented, a separate browser window is opened showing a dynamically-created web page containing the annotation supplied by the corresponding annotator. The particular annotations selected by the service for presentation to the user here are determined based on the URL (Universal Resource Locator) of the currently-viewed web page. This service provides a means for portal sites, through provision of annotations, to increase the reach of the information they provide, and the content of the annotations themselves may be correspondingly diverse.

Another type of annotation service is provided by ThirdVoice (www.thirdvoice.com). Again users access the service by installing specialized software that plugs into the user's web browser software. This software provides support for so-called "anarchic annotation". That is, any user of the service may annotate any Internet web-page, and other users may then access these annotations. In addition, annotations relating to company names and technical terms in web-pages are maintained by the service provider. For example, a particular company name may be displayed underlined in the text of a web-page viewed by a user. Clicking on the name then calls up an annotation menu indicating that this has been identified as the name of a company and presenting a number of links relating to aspects of this company, such as the company's home page, stock information, and a listing of key competitors. Product terms like DVD, MP3, etc. in web pages may be similarly linked to annotations concerning suppliers of related products. Here, therefore, the selection of particular annotations to be offered to the user is based on identification of keywords, either company names or product terms, in the web page text.

The Jeeves Text Sponsorship Network provides a different type of service where web pages giving the results of keyword searches on participating search sites are annotated with links to sponsors' web pages. The "sponsored links" are shown in a special section alongside the search results when a user launches a keyword search on a participating site. Sponsors may bid a fixed amount on any keyword, and the sponsored links of the three highest bidders are displayed to users based on the keywords used in searches.

US Patent No. 5,999,929 discloses a further example of a web page annotation system. This "link referral system" assigns URLs of web pages to particular classes based on abstractions of the section titles in the web page data, maintaining lists of URLs in each class. In one embodiment the system retrieves web pages from the Internet in response to user requests, and detects, in a retrieved web page, any links to other pages that have already been classified by the system. If such a link is identified, the web page forwarded to the user is annotated with a link referral indicator. Clicking on this indicator results in the user display showing a list of the other links in the same class. In another embodiment, the user downloads web pages in the usual way, and a link request daemon associated with the user's web browser interacts with the link referral system to retrieve links in the same class as a link identified in the web page. Either way, like the Annotate.Net service, the annotation system here is essentially URL-based, though in this case the annotation is performed to supplement links in web pages with additional links in a common class rather than to provide information from participating annotators based on the URL of a web page itself.

While the various systems discussed above differ in purpose and operation, the mechanism for selecting annotations is essentially URL-based or keyword-based in each case. In particular, where the annotation service provides a means for parties to offer annotations for display to Internet users, the particular annotations selected in a given case are determined based on detection of a particular URL or keyword. Such annotation selection mechanisms inherently limit the efficacy of annotation services from the perspective of both users and contributing annotators. Consumers are increasingly using the Internet to obtain information about goods or services (referred to generally herein as "products") with a view to making purchasing decisions. Annotation information that may be useful for this purpose will not be presented to users when viewing web pages where predetermined URLs or keywords are not detected. Conversely, contributing annotators can only reach a limited number of Internet users with the offered annotation information according to the particular URLs or keywords specified for their annotations. Accordingly, it would be highly desirable to provide a web page annotation system which allows more effective matching of available annotations to potential interests of Internet users.

Patent documents WO 00/04434 A2 and EP 1 061 465 A2 provide additional examples of prior art web page annotation systems.

### Disclosure of the Invention

According to one aspect of the present invention there is provided a method for annotating web pages requested from the Internet by a user station, the method comprising, in a data processing system connectable to the user station:
(a) receiving web page data retrieved from the Internet in response to a web page request from the user station;
(b) analyzing the web page data to select, in dependence on the subject matter of the data, at least one product class to which said subject matter relates from a plurality of product classes represented in a product classification database of the system, the product classification database storing, for each said product class, a set of product data items indicative of attributes of products in that class;
(c) retrieving from the product classification database product data items associated with the or each product class selected in step (b);
(d) for each of a group of annotations, each associated in the system with a display condition dependent on one or more product data items in the product classification database, determining whether the associated display condition is satisfied by the product data items retrieved in step (c); and
(e) for each of a set of annotations for which the associated display condition is satisfied in step (d), supplying annotation data indicative of the annotation to the user station for display in association with the web page.

Thus, web page annotation systems embodying the present invention employ a product classification database in which a plurality of classes of products are represented. A set of one or more product data items is stored in the database for each product class, where each product data item is indicative of a particular attribute of products in that class. For each of a plurality of annotations which may be offered to a user, an associated display condition is defined in the system, each of these display conditions being defined in terms of one or more product data items in the product classification database. In operation, when a web page is retrieved from the Internet in response to a user request, the subject matter of the web page data is analyzed and at least one product class to which the subject matter relates is selected from the product classification database. For the (or each) product class selected, product data items associated with that product class are then retrieved from the database and used to evaluate the display conditions for at least a subset of the available annotations. Then, for a set of these annotations for which the associated display condition is satisfied, annotation data indicative of the annotation is supplied to the user station for display in association with the web page.

In embodiments of the present invention, the subject matter of a web page is effectively mapped to a product class for which attributes are represented by data in the product classification database, and this data is used to define display conditions for the annotations. This data may be as comprehensive as desired, allowing sophisticated annotation display conditions, identifying precisely the particular product categories, products or product features to which an annotation is relevant, to be formulated in a simple manner by reference to this data. However, selection of the annotation is not dependent on these specific products or features being described in any particular manner in the web page itself (indeed they need not necessarily be mentioned at all), since the attributes on which annotation selection is based are identified by first mapping the subject matter of web pages to product classes in the classification database.

Embodiments of the invention thus provide highly effective annotation systems, allowing convenient formulation of conditions for selection of annotations relevant to web pages without constraint to particular URLs or keywords appearing in web pages themselves. Annotations may be matched more effectively to potential interests of users, offering benefits to both users and annotators, and providing a practical basis for extending the scope of annotation services generally. By way of example, a new type of annotation service employing a system embodying the invention will be described in detail below.

Methods embodying the invention may be implemented by a data processing system which is connectable directly or indirectly to the user station. For example, the system may be associate with an Internet access server, such as an ISP proxy server or a gateway server of a private intranet, which retrieves web pages from the Internet in response to web page requests from the user station. In such cases, the server may forward retrieved web pages to both the user and the annotation system, and, when the annotation system has processed the web page data, may forward the resulting annotation data on to the user station for display.

In alternative embodiments, however, web pages may be downloaded to the user station independently of the annotation system. Here, a dedicated application associated with the user's web browser may forward the web page data to the annotation system which then returns the resulting annotation data to the user station for display. Either way, the web page data processed by the annotation system preferably includes all text data, whether displayable content or format descriptors such as section titles, which is indicative of the subject matter of the web page content.

In general, a given class of products represented in the classification database may correspond to one or more products, from a specific single product to a category of related products. For the sake of efficiency, however, the product classes are preferably defined in accordance with a generally hierarchical classification system, the product classification database being organized to reflect this hierarchy. A set of one or more product data items may be stored for a given product class, and these data items may relate to various attributes of products in the class, including product names or category descriptors, product features and components; supplier details etc., as appropriate.

Various text processing mechanisms may be employed in analyzing the web page data to select the appropriate product class(es) to which the web page relates. The particular relationship between the web page content and product classes selected may be built in to the text processing algorithms as desired, but it will generally be desirable to map at least web pages relating to particular products or types of products to corresponding product classes in the classification database. Text processing algorithms here may operate independently of the product classification data, but for greater efficiency the text processing is preferably performed with reference to product data items in the product classification database. For example, where a hierarchical product classification system is employed, text classification mechanisms may be used in a first stage of the analysis process to identify a product class (or classes) corresponding to a particular category (or categories) of products to which the text relates. This initial product class selection may then be refined in a second stage by checking for references in the text corresponding to particular product data items in the classification database. Of course, depending on the particular implementation of the product class selection process, this process may not result in selection of a product class for every web page. Where no product classes are identified for a web page, then annotation data (or at least new annotation data) may not be supplied to the user station for that page.

The data items associated with a selected product class which are retrieved in step (c) above may consist only of the set of data items stored for that product class. However, depending on the particular classification system employed, data items stored for other, related classes may be retrieved here. For example, in a hierarchical classification system, data items stored for "ancestor" or "descendent" classes of a selected product class may also be retrieved as discussed further below.

The group of annotations whose display conditions are evaluated in step (d) above may be only a subset of all the available annotations. For example, embodiments are envisaged where annotations are categorized to some extent and an appropriate group of annotations selected based on the product class selected in step (b). In the simplest case however, the display conditions of all annotations may be evaluated in step (d). While these display conditions are dependent on the product data items discussed above, at least some of the conditions may additionally depend on further data items stored in the system, such as user-specific data, as discussed further below. Evaluating such a display condition thus involves determining whether the condition is satisfied by both the product data items and the appropriate further data items.

The set of annotations in step (e) for which annotation data is supplied to the user station may be all those for which the associated display condition is satisfied in step (d). In other embodiments, for example where display space is limited, up to a predetermined maximum number of annotations may be selected. In this case, annotations are preferably selected in a priority order according to some priority parameter associated with the annotations. Particular examples of such priority systems will be described below.

In other embodiments of the present invention, the annotation data supplied to the user station comprises the annotation itself, though in preferred systems the annotation data comprises at least a link to the annotation and may include additional data such as an abstract, annotators' logo or other such indicia conveying some basic information about the annotation. The user may then use the link to access the entire annotation if desired. It will be appreciated, therefore, that the annotations themselves need not be stored in the system, the display conditions being associated with the annotations in the system simply by storing the corresponding link for each display condition.

Another aspect of the invention provides apparatus for annotating web pages requested from the Internet by a user station connectable to the apparatus. The apparatus comprises:
a product classification database for storing, for each of a plurality of product classes represented in the database, a set of product data items indicative of attributes of products in that class;
an annotation database for storing, for each of a plurality of annotations, a display condition dependent on one or more product data items in the product classification database; and
a controller for receiving web page data retrieved from the Internet in response to a web page request from the user station, the controller being configured to
   (a) analyze the web page data to select, in dependence on the subject matter of the data, at least one product class to which said subject matter relates from the product classes represented in the product classification database,
   (b) retrieve from the product classification database product data items associated with the or each product class selected in step (a),
   (c) determine, for each of a group of said annotations, whether the associated display condition in the annotation database is satisfied by the product data items retrieved in step (b), and
   (d) for each of a set of annotations for which the associated display condition is satisfied in step (c), to supply annotation data indicative of the annotation for display at the user station in association with the web page.

It is to be understood that, in general, where features are described herein with reference to a method embodying the invention, corresponding features may be provided in apparatus embodying the invention, and vice versa. The invention also extends to a computer program product comprising computer program code means which, when loaded in a controller of a data processing system, configures the controller to perform a web page annotation method as described above.

### Brief Description of the Drawings

Embodiments of the invention will now be described, by way of example, with reference to the accompanying drawings in which:
Figure 1 is a schematic block diagram of a web page annotation system embodying a preferred embodiment of the invention;
Figure 2 is a schematic illustration of part of a product classification database of a type which may be employed in embodiments of the invention;
Figure 3 is a flow chart illustrating operation of an ISP server in the embodiment of Figure 1;
Figure 4 is a flow chart illustrating operation of a product identification server in the embodiment of Figure 1;
Figure 5 is a flow chart illustrating operation of an annotation server in the embodiment of Figure 1;
Figures 6 and 7 show flow charts illustrating in more detail respective steps in the flow chart of Figure 5; and
Figure 8 illustrates one example of a user display resulting from operation of the annotation system.

### Best Mode for Carrying Out the Invention

The web page annotation system described in detail below implements a particular annotation service designed to assist consumers in gathering information which each individual consumer may consider relevant to a product purchasing decision.

The current HTML-based model of Internet browsing gives web page providers full control over the web page content. They decide which links to include and which text and pictures to provide. In the context of electronic commerce, the total control of the web page provider makes it problematical for consumers to base purchasing decisions on the information provided at a single merchant's web site. Before buying products, many consumers prefer to collect more information, such as information on merchants from merchant rating sites, and information on products from specialized product comparison and recommendation sites, professional consumer organizations or product rating sites, or the web sites of organizations like Greenpeace and Amnesty International which may offer information about particular products and suppliers. Consumers may also wish to check whether they may buy a product from their favorite merchant, or from other merchants with faster delivery or cheaper prices. Collecting all this information requires considerable effort and expertise on where and how to search for the required information.

The annotation system described below implements an annotation service which addresses this problem, reducing the need for consumers to perform independent searches to obtain information relevant to intended purchasing transactions. In the particular embodiment described, the system operates to provide users with access to two basic types of annotation information. The first group of annotations comprises information items from particular sources, referred to hereinafter as "authorities", who offer their annotations for use in the service. These authorities may include a wide range of organizations, from religious, charitable or political organizations to consumer rating or review organizations and individual commercial entities. In general, any entity providing comments or other information which consumers may find relevant to a purchasing transaction may participate as an authority in the service. The second group of annotations comprises advertisements submitted for use in the service by participating advertisers.

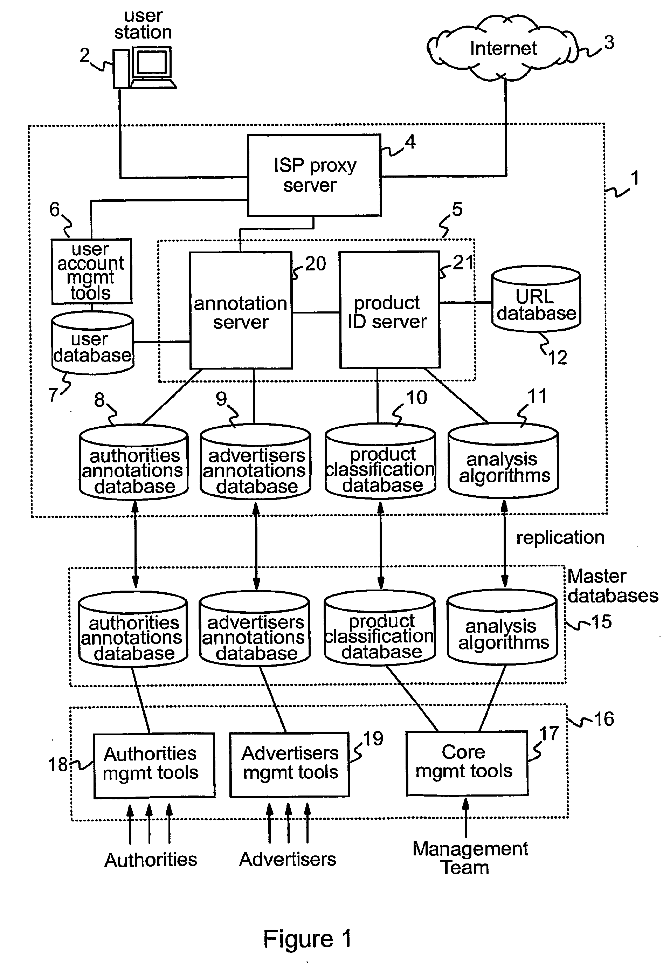

The block diagram of Figure 1 illustrates an overall system architecture. A data processing system 1 is provided at an Internet Service Provider (ISP) site in this embodiment and provides customers who connect to the ISP system from user stations 2 with access to the Internet 3. In particular, Internet access is provided by an ISP proxy server 4 of the ISP system 1. Proxy server 4 is connected to an annotation controller, indicated generally at 5, and to a user account management component 6 providing software tools which enable users to access and update user account data stored in a user database 7 as discussed further below. The annotation controller 5 may also access the user database 7, as well as five further databases indicated by references 8 to 12 in the figure.

Database 8 is an authorities annotations database in which the display conditions for authorities' annotations are stored with their associated data as described further below. Database 9 is an advertisers annotations database in which the display conditions for advertisers' annotations are similarly stored. Database 10 stores the product classification data, and database 11 the analysis algorithms, used in the product identification process of the annotation system discussed further below. Database 12 is a URL database which is also employed in the product identification process discussed below.

In addition to the ISP system 1, the overall annotation system here includes a set of master components which are centrally maintained at the site of a system management organization on behalf of all ISPs who offer the annotation service to their customers. These include a set of master databases 15 which correspond to the databases 8 to 11 of the ISP system 1 as indicated in the figure. In addition, a central management component 16, implemented by one or more servers for example, provides the software tools necessary for set-up and maintenance of the system. These include a set of core management tools 17 with which a management team at the central organization sets up and maintains the product classification data and analysis algorithms in the corresponding master databases. A set of authorities' management tools 18 are provided to enable participating authorities to formulate and maintain the display conditions and associated data for their annotations in the master authorities annotations database. A set of advertisers' management tools 19 are similarly provided to enable participating advertisers to input and maintain their advertisement display conditions and associated data in the master advertisers annotations database. These management tools may also support other administrative tasks such as viewing of account and statistical information for example. As indicated in the figure, the contents of the master databases 15 are periodically replicated to the corresponding databases of ISP system 1.

Focusing now on the ISP system 1, the annotation controller 5 in this embodiment is implemented by an annotation server 20 and a product identification server 21. These servers are configured by software to perform the key steps of the web page annotation process described in detail below, and suitable software will be apparent to those skilled in the art from the description herein. It will be appreciated that the program code constituting this software may be supplied as a separate product, embodied in a computer-readable medium such as a diskette or an electronic transmission sent to a system operator for example, for loading in servers 20, 21 to configure the servers to operate as described. Operation of servers 20 and 21 utilizes various data stored in databases 7 to 12 as will now be described.

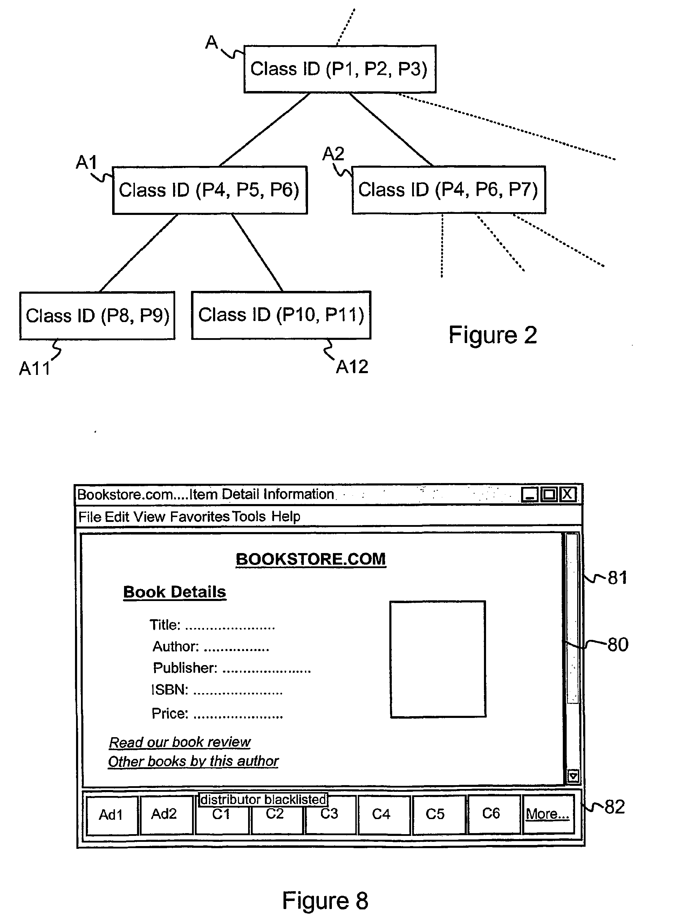

Product ID server 21 uses databases 10, 11 and 12 in analyzing a received web page. This analysis is performed to select one or more product classes, represented in the product classification database 10, to which the subject matter of the web page relates. The product classification database stores data representing a generally hierarchical product classification system defining multiple product classes organized in a hierarchical fashion. A given product class may represent a particular product or category of products, and for each product class a set of product data items is stored in the database, where each product data item defmes a particular attribute of the product or products in that class. Figure 2 is a schematic illustration of the data structure for a portion of the classification hierarchy in one particular example of the product classification database. Five product classes of the hierarchy are illustrated by the blocks in the figure. Here, the classes labeled A11 and A12 represent respective individual products which are both members of a particular product category represented by product class A1 in the figure. Product classes A11 and A12 may thus be considered "descendants" of product class A1, and conversely, class A1 may be considered an "ancestor" of A11 and A12 in the hierarchy. Class A1 is itself a descendant of product class A, so that A1 represents a sub-category of products in the broader category represented by A. Class A, which may itself be a descendent of a class in a higher level of the hierarchy, may have a number of other descendent classes such as A2 shown in the figure, and each of these descendent classes may, like A1, have its own descendent classes. Thus, every product class is cross-referenced in the data structure with its particular ancestor and/or descendant classes as appropriate. Each individual product class is referenced in the data structure by a class ID, and a set of one or more product data items, referred to hereinafter as "properties" P, may be stored against each class ID. Such properties may define various attributes of products, from a simple name of a product or product category, to more detailed aspects such as particular product features and components, supplier details, etc. (Note that the class ID may be an abstract reference, so that at least one property, descriptive of the product or products in a class, may be stored as a product data item for each class. However, where the class ID is itself a descriptor for product(s) in the class, this may be considered to be a product data item for the purposes of the annotation method, and there need not necessarily be additional properties stored against such a class ID in all cases).

According to one embodiment of the invention, properties P may be expressed as <name,value> pairs so that, for example, a property <battery, cadmium> may be stored where product(s) in the class require cadmium batteries. In general, for a class representing a category of products, properties common to all descendent classes may be stored as properties for that class. Thus, in the example of Figure 2, properties P1, P2 and P3 are common to all descendants of class A. Properties P4, P5 and P6 of class A1 are common to the products represented by classes A11 and A12, and properties P4, P6 and P7 for A2 are common to descendent classes of A2. For products A11 and A12, additional properties P8, P9 and P10, P11 are stored respectively as indicated. In addition to descendants of a given product class, identifiable subcomponents of product(s) in the class may be cross-referenced with the product class where these subcomponents are represented in another part of the data structure. Moreover, while particular supplier details may be defined by properties of a given product class, comprehensive details of suppliers may be stored independently in the database and cross-referenced with product classes as appropriate, thus enabling access from the product classification structure to more detailed supplier information.

The analysis algorithms stored in database 11 may be employed by product ID server 21 to process web pages with reference to data stored in the product classification database described above. These algorithms implement a two-stage analysis process. In the first stage, automatic text processing mechanisms are preferably employed to make a preliminary identification of the product class, or group of product classes, to which the content of the web page relates. These mechanisms may employ generally known text processing techniques and may be formulated to learn from input data examples, developing and refining rules for mapping subject matter to product classes based on factors such as the appearance of particular combinations of words in the text, the context of particular words and numbers of references to words in particular sets, etc. To allow for web pages relating to more than one subject, these text processing algorithms may first analyze the coherence of text to identify segments relating to different subjects, and then process the resulting segments individually. The second stage employs knowledge based mechanisms which are specialized for the individual product class(es) identified by the first processing stage. These knowledge based mechanisms, again employing generally known techniques, may check for references in the text corresponding to particular properties in the product classification database which distinguish between descendent product classes. This allows the preliminary selection of a product class in the first analysis stage to be refined in most cases to a more specific product class, where possible to a class representing a specific product.

By means of the analysis process described above, the product ID server 21 may select at least one product class in database 10 relating to the subject matter of the web page. When this process has been performed for a web page, in this embodiment the product ID server stores the class ID for the selected class in the URL database 12 against the URL of the web page, together with a "valid-until date" set based on the expected frequency of web page updates.

The annotation server 20 may use data stored in the user database 7 and the two annotations databases 8 and 9 to select particular annotations for which annotation data is to be supplied to the user station for a given web page. Considering first user database 7, the user account data for a given user, identified by a corresponding user ID, includes a set of rating values defming a preference profile for authorities participating in the annotation service. These rating values are set by users, by means of account management tools 6, to indicate the relative importance that the user attaches to comments from the individual authorities for specific product categories. In this example, the account management tools 6 present users with a hierarchy of product categories, corresponding to product classes in the classification database 10, and a user may assign to each node of the hierarchy any number of authorities (with an associated rating value) from the list of participating authorities. Possible rating values may be 0, 1, 2 or 3 with 0 being the default value. For a given authority, rating values lower down the hierarchy may overwrite higher-level rating values. These rating values are used by annotation server 20 in the annotation selection process as described further below.

The annotation selection process may also use the display conditions stored in the annotation databases 8 and 9. Each of these display conditions is expressed in terms of one or more properties in the product classification database to indicate the particular products, product categories or product features, for example, to which the associated annotation is relevant. The display condition is stored together with associated data which differs in this embodiment for authorities' and advertisers' annotations. An example of XML (Extensible Markup Language)-format data stored in database 8 for an authority annotation is shown below.

```
 <comment       url=http://www.enviro.org/comments/cadmiumBattery
                type=product>
        <trigger importance=3>
                <member product.battery cadmium>
        </trigger>
         <abstract>
                uses worst of battery type
         </abstract>
 </comment>
```

Here, the URL in the data "comment" points to the web page of the comment offered as the annotation by the authority in question. The element "type" indicates whether the comment relates to a product, a product category, or a product supplier, in this case to a product. This element may be used in generating the annotation data to be displayed to the user as discussed further below. The trigger clause specifies the display condition together with an importance rating set by the authority. The importance rating may be set, for example, at values from 1 to 3 to indicate increasing importance with which the annotation is viewed by the authority. Here the element "importance" is set to 3 to indicate the highest importance rating. The display condition is expressed by the member clause which specifies the values of particular properties required for applicability of the annotation. Here the member clause specifies that the property "battery" should have the value "cadmium", i.e. that the product uses a cadmium battery. The abstract clause gives a brief abstract of the annotation which may be displayed to the user without accessing the complete annotation as discussed further below.

An example of the XML-format data stored in database 9 for an advertiser's annotation is shown below.

```
 <ad url=http//www.tshirts.com/catalog?PID=79797610
         budget=100
         validUntil=2001-09-25>
         <trigger       firstBid=0.05
                        loselncrement=0.05
                        winDecrement=0.01
                        maxBid=0.5>
                <equal consumer.buyFrequency high>
                <less consumer.age 50>
                <equal product.ISBN 79795790>
         </trigger>
         <abstract>
                 Get matching T-shirt
         </abstract>
 </ad>
```

Here, the URL again points to the location where the full advertisement may be found, and an abstract is included as for the authority annotation above. The trigger clause here specifies a bidding strategy from which a bid value, indicative of the price offered by the advertiser for selection of the advertisement, may be determined. In particular, the value of "budget" indicates the total amount the advertiser is willing to spend on the particular advertisement up to a date specified by the element "validUntil". "firstBid" in the trigger clause indicates the price offered for a first bid. "winDecrement" indicates the amount by which the bid value is to be decreased if a bid is won, and "loseIncrement" the amount by which the bid should be increased if a bid is lost, up to a maximum amount specified by "max.Bid". Each time an advertisement competes for selection as described further below, the annotation server 20 updates account information which is stored for that advertisement in database 9. For each advertisement, a current bid value is updated by subtracting/adding the win decrement/lose increment respectively from the last current bid value according to whether the advertisement won the bid (i.e. was selected) or not. In addition, when the bid was won, an account balance is updated to reflect the remaining budget by subtracting the last current bid value. Operation of the bidding process will be described in more detail below. The trigger clause above also specifies the display condition for the advertisement. Here, the display condition references not only properties in the product classification database, but also further data items relating to characteristics of the user which are recorded by the ISP against individual user IDs, for example in the user database 7. In this particular example, the display condition requires that: a parameter "buyFrequency", indicating the purchasing rate of the consumer, is determined to be high; that the consumer's age is less than 50; and that the property ISBN has the value 79798790 (i.e. that the product is a book with the ISBN number stated).

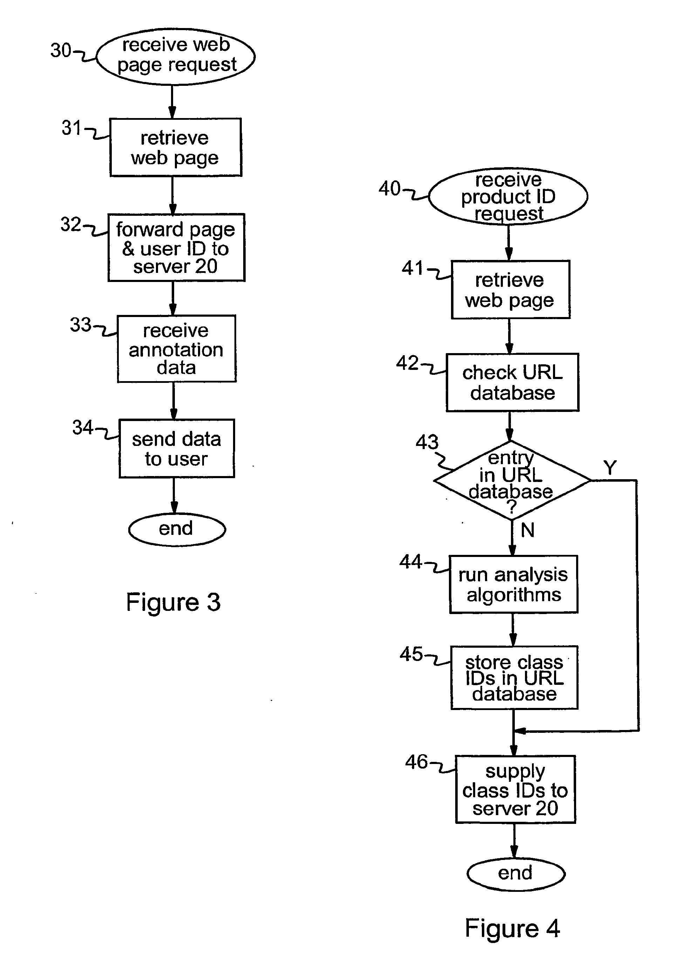

Having described the information used in the annotation process, the operation of the various components of the annotation system 1 will now be described in detail with reference to the flow charts of Figures 3 to 7.

Figure 3 illustrates operation of ISP proxy server 4 in response to receipt of a web page request from user station 2. Receipt of the web page request is represented by step 30 in the figure, and in step 31 the ISP server 4 retrieves the web page from the Internet 3 in the usual way. In step 32, the ISP server sends the web page to the user station 2 as usual, but also forwards the web page to the annotation server 20 of controller 5. When forwarding the web page to annotation server 20, the ISP server also supplies the user ID of the current user (determined from the web page request from the user station) for use by the annotation server as discussed below. The annotation server operates as detailed below to supply annotation data for the web page back to ISP server 4. This annotation data is received by the ISP server at step 33, and in step 34 the ISP server transmits the annotation data to the user station 2 for display in association with the web page. (A particular example of the resulting user display will be described below). The operation is then complete.

When the annotation server 20 receives a web page from ISP server 4, the annotation server stores the web page (with the supplied used ID) and then issues a product ID request to product ID server 21. The subsequent operation of product ID server 21 is shown in Figure 4. Following receipt of the product ID request at step 40, in step 41 server 21 retrieves the web page from annotation server 20. Next, in step 42 server 21 checks whether there is a valid entry in the URL database 12 for the URL of the web page following previous analysis of the same web page as described above. A valid entry here may be one for which the valid-until date has not yet expired. If a valid entry is found (as indicated by a "Yes" at step 43), operation proceeds directly to step 46 where the class ID(s) stored under this entry are supplied to the annotation server 20, and the operation is complete. If no valid entry is found (indicated by a "No" at step 43), then in step 44 the product ID server runs the analysis algorithms described above to select the appropriate product class(es) in the classification database 10. Next, in step 45, the class ID for the (or each) selected class is stored under the web page URL in URL database 12, together with an appropriate valid-until date which may be calculated, for example, as a fixed number of days from the current date. Finally, the selected class ID is forwarded to annotation server 21 in step 46, and the operation terminates. '

In the Figure 4 process, where supplier data is stored independently in the classification database as described above, the server 21 may additionally identify a supplier ID from the web page where possible. This may be performed as part of the analysis process of step 44, for example by comparing domain names in the web page URL with supplier names in the prestored supplier data. Supplier IDs identified in this way, or referenced by properties associated with the selected product classes, may be included in the entry in the URL database 12 and supplied to the annotation server in step 46 together with the class IDs.

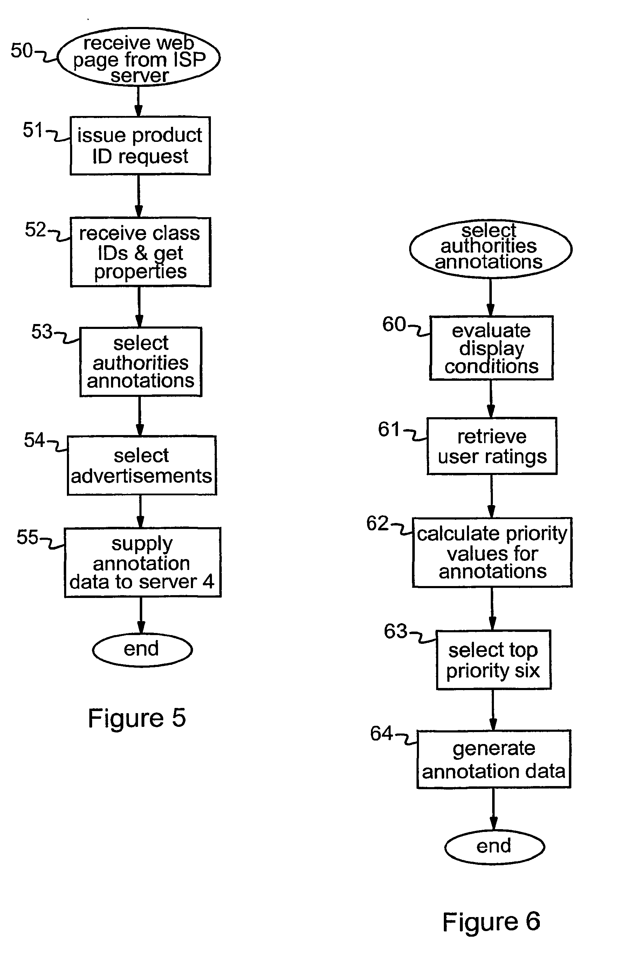

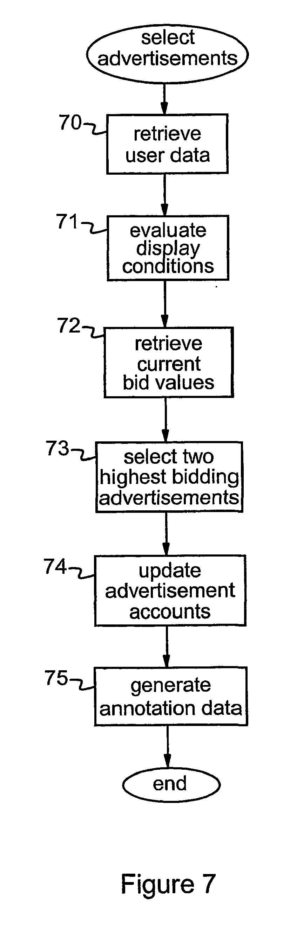

Figure 5 shows the operation of the annotation server 20, where steps 50 and 51 represent receipt of a web page from ISP server 4, and issue of a product ID request to server 21, as already described. On receipt of the selected class ID (or IDs) from server 21 at step 52 of Figure 5, the annotation server may retrieve, for the or each class ID, properties associated with that class and stored classification database 10. Depending on the particular implementation of the classification system, the properties retrieved for each class may be only those stored under that particular class ID in the database, or properties associated with other classes referenced from this class. For instance, in the example of Figure 2, the common properties stored for ancestor classes of a given class may be retrieved in addition to the particular properties stored for that class. For a class representing a product category, it will generally be sufficient to retrieve only those properties stored for that class (and ancestor classes where appropriate), though properties stored for descendent classes may be retrieved in some embodiments if desired. Moreover, where subcomponents and supplier data are referenced from product classes (or a supplier ID is supplied by the product ID server as described above), subcomponent and supplier properties may be retrieved as appropriate. In any case, after retrieval of the properties in step 52, the annotation server then uses these properties in step 53 to select the authorities annotations for the web page. This process will be described in more detail with reference to Figure 6. Next, the advertisements are selected in step 54 using the retrieved properties, and this process is detailed further in Figure 7. After selection of the annotations, at step 55 the resulting annotation data is supplied to the ISP server 4 for forwarding to the user station, and the process terminates.

Referring now to Figure 6, a preferred process of selecting authorities' annotations (step 53 of Figure 5) is described in more detail. In step 60, the annotation server 20 evaluates the display conditions stored in annotation database 8 to identify the annotations whose display conditions are satisfied by the properties retrieved in step 52 of Figure 5. In step 61 the annotation server accesses user database 7 to retrieve, for the current user ID, the authorities and associated rating values stored as described above for the product category or categories corresponding to the class IDs received from product ID server 21 in step 52 of Figure 5. Of the annotations identified in step 60, those for which the user has specified a rating value for the corresponding authority are selected. (The identity of the annotating authority may be determined here from domain names in the URL associated with the display condition where appropriate, or from an authority ID specified in the data stored for each display condition for example). For each of the remaining annotations, where more than one rating value is specified for the authority (i.e. in the case of a web page relating to multiple product categories) the maximum user rating value for that authority is selected. Next, in step 62, the annotation server calculates a priority value for each annotation as the product of the corresponding user rating value and the importance value specified by the authority for that annotation as described above. In step 63, up to a preset maximum number (here six) annotations are then selected in order of decreasing priority value. (Where there are more than six annotations, these may be noted here by the annotation server for access by the user in response to a subsequent request as discussed further below). Next, in step 64 the annotation server generates the annotation data for the selected annotations for supply to the ISP server 4. This data comprises an icon for each annotation for display at the user station as described below. Each icon may provide a link to the corresponding annotation at the URL stored in the annotation database, and the abstract for the annotation may be supplied in this embodiment as an "alt text" associated with the icon. Typically, each icon will also include other indicia, such as the authority name or a logo associated with the authority where specified in the annotation database. In addition, the icons may be color-coded or otherwise indicate whether the corresponding annotation refers to a product, supplier or product category based on the "type" element associated with the annotation as described above.

Figure 7 shows the process of selecting advertisers annotations (step 54 of Figure 5) in more detail. In step 70, annotation server 20 retrieves the user details (consumer age, buy frequency etc.) referenced in advertisement display conditions as described above which are stored in user database 7 under the current user ID. Next, in step 71, the annotation server may evaluate the advertisement display conditions in database 9 to identify the set of advertisements whose display conditions are satisfied by the properties retrieved in step 52 of Figure 5 and the user properties retrieved in step 70 as appropriate. For the resulting set of advertisements competing for selection, in step 72 the current bid values may be retrieved from the advertisement account information discussed above. The two highest-bidding advertisements may then be selected in step 73. In step 74, the advertisement account information for each of the competing advertisements may be updated as described above to adjust the current bid value and remaining budget according to whether the advertisement was selected or not in step 73. (If an advertising budget is reduced to zero here, then a message to this effect may be sent automatically to the advertiser). Then, in step 74, the annotation server generates the annotation data for the selected advertisements in a similar manner to step 64 of Figure 6, and the process is complete.

Figure 8 illustrates one example of a user display resulting from annotation of a web page by the process described above. In this example, the web page relates to a particular book offered for sale by an online bookstore, and is displayed in a main frame 80 of the web browser window 81. In this example, the user interface presenting the annotation data to the user is in the form of a footnotes bar displayed in a separate frame 82, at the bottom of the browser window, with sub-frames for the annotation icons. The icons representing the two winning advertisements, Ad1 and Ad2, are displayed at the left-hand side of the footnotes bar. The next six icons, labeled C1 to C6, represent the six authorities' annotations selected in the annotation process. Clicking on any of these icons takes the user to the corresponding annotation which may be displayed in a separate browser window, for example. The last icon on the right-hand side, labeled "More", provides a link to a display showing any additional authorities' annotations noted by the annotation server in step 63 of Figure 6 as described above. These may be displayed in a separate browser window, or in the same browser window with an updated footnotes bar, for example. As indicated for icon C1 in the figure, when the user places the cursor over one of the icons, the associated abstract is displayed as Alt text. As discussed above, the icons themselves may include information such as annotators' logos, and may be color-coded according to the subject of the annotation. In other embodiments, color-coding of authorities' annotations may be performed based on whether the annotation is a positive, negative or neutral comment where an appropriate indicator is provided in the annotation database for each annotation. The footnotes bar may also provide an additional link (not shown) enabling the user to access his account information in user database 7 and adjust his authority preference profile if desired. Of course, while one particular user interface for displaying annotation data is shown in the figure, many other possibilities are contemplated. For example, in some embodiments, annotation data may be presented to users in a separate browser window and/or presented in response to the user clicking on an "annotation request" icon in the main browser window.

### Industrial Applicability

It will be seen that the present invention provides an annotation system that provides users with access to personally-tailored annotation information relevant to web page content while allowing annotation providers to conveniently specify display conditions for their annotations which reference the topic of the web page content to which the annotations are relevant. It will of course be appreciated that many changes and modifications may be made to the particular embodiment described above without departing from the scope of the invention. For example, while databases 7 to 12 are illustrated as separate elements in Figure 1, in practice more than one of these databases may of course be implemented by the same device. Also, while the above embodiment operates with two particular groups of annotations, i.e. authorities' annotations and advertisements, in general one or more groups of annotations may be employed. Further, while a single display condition is described above for each annotation, in general one or more display conditions may be associated with each annotation as desired.

Various alternatives to the advertisement bidding process described above are also within the scope of the present invention. For example, advertisers may simply pay a fixed fee for inclusion of an advertisement in the service for a specified time, in which case advertisement selection may be based solely on the display conditions. If desired, the system may select and display advertising annotations before authorities' annotations, and the number of "spaces" allocated to advertisements (e.g. sub-frames in the footnotes bar of Figure 8) may be user-selectable. With regard to the text analysis process, this may involve a preliminary stage which determines whether the web page content is generally product-related, and if not the annotation process may then be terminated for that page. In any case, situations where the text analysis process cannot identify a product class for a particular web page may be handled in various ways. For example no annotation data may be supplied, or annotation data for the last page accessed by that user may be retained, or a set of advertisements may be selected based on a history of product classes identified during that user-session. Further, while it is assumed that system is applied to HTML-format web pages in the above embodiment, the system is of course applicable with other data formats.

## Claims

1. A method for annotating web pages requested from the Internet (3) by a user station (2), the method comprising, in a data processing system (1) connectable to the user station (2):
(a) receiving web page data retrieved from the Internet (3) in response to a web page request from the user station (2);
(b) analyzing the web page data to select, in dependence on the subject matter of the data, at least one product class to which said subject matter relates from a plurality of product classes represented in a product classification database (10) of the system (1), the product classification database (10) storing, for each said product class, a set of product data items indicative of attributes of products in that class;
(c) retrieving from the product classification database (10) product data items associated with the or each product class selected in step (b);
(d) for each of a group of annotations, each associated in the system (1) with a display condition dependent on one or more product data items in the product classification database (10), determining whether the associated display condition is satisfied by the product data items retrieved in step (c); and
(e) for each of a set of annotations for which the associated display condition is satisfied in step (d), supplying annotation data indicative of the annotation to the user station (2) for display in association with the web page.

2. A method as claimed in claim 1 wherein said annotation data comprises a link to the corresponding annotation.

3. A method as claimed in claim 1 or claim 2 including, prior to step (a), receiving the web page request from the user station (2) and obtaining the web page from the Internet (3) for supply to the user station (2).

4. The method of claim 1 wherein step (b) comprises text-processing the web page data with reference to product data items in the product classification database (10) to select said at least one product class.

5. The method of claim 1 wherein, for at least some annotations of said group, the associated display conditions are additionally dependent on respective sets of further data items stored in the system (1), and wherein, for each such annotation, step (d) comprises determining whether the associated display condition is satisfied by said product data items and the respective set of further data items.

6. The method of claim 1 wherein said set of annotations comprises up to a predetermined maximum number of annotations.

7. The method of claim 1 wherein step (e) includes selecting said set of annotations, from annotations for which the associated display condition is satisfied in step (d), in a priority order according to a priority parameter associated with each annotation.

8. The method of claim 7 wherein:
the annotations comprise information items from predetermined sources;
the priority parameter associated with an annotation is dependent on a rating value, assigned by a user to the source of the annotation and prestored in the system (1) in association with a user ID for that user; and
step (e) includes determining, for each of the annotations for which the associated display condition is satisfied, the priority parameter associated with the annotation from the rating value prestored for the source of that annotation in association with a current user ID determined by communication from the user station (2).

9. The method of claim 7 wherein:
the annotations comprise advertisements;
the priority parameter associated with an annotation comprises a bid value defined in the system (1) and indicative of a price an advertiser offers for display of the advertisement; and
step (e) includes selecting said set of annotations in order of decreasing price indicated by the bid values for annotations for which the associated display condition is satisfied in step (d).

10. The method of claim 7 including performing steps (d) and (e) for each of first and second groups of annotations, wherein:
annotations in the first group comprise information items from predetermined sources, said priority parameter associated with an annotation in the first group being dependent on a rating value, assigned by a user to the source of the annotation and prestored in the system (1) in association with a user ID for that user;
step (e) for the first group includes determining, for each of the annotations for which the associated display condition is satisfied in step (d), the priority parameter associated with the annotation from the rating value prestored for the source of that annotation in association with a current user ID determined by communication from the user station (2);
annotations in the second group comprise advertisements, said priority parameter associated with an annotation in the second group comprising a bid value defined in the system (1) and indicative of a price an advertiser offers for display of the advertisement; and
step (e) for the second group includes selecting said set of annotations in order of decreasing price indicated by the bid values for annotations in the second group for which the associated display condition is satisfied in step (d).

11. The method of claim 1 further including the steps of:
after step (b), storing data identifying the or each selected product class, in association with the URL of the web page data, in a URL database (12) of the system (1); and
prior to step (b), checking whether the URL of the received web page data is stored in the URL database (12), and, if so, performing an alternative step (b) comprising selecting the or each product class identified in the URL database (12) in association with the URL of the received web page data.

12. The method of claim 1 further including, prior to performing step (a) for a first web page, the step of generating the set of product data items for each said product class and storing the product data items in the product classification database (10).

13. The method of claim 1 further including, prior to performing step (a) for a first web page, the step of generating the display conditions associated with respective said annotations, and storing the display conditions in an annotation database (8, 9) of the system (1).

14. An apparatus for annotating web pages requested from the Internet (3) by a user station (2) connectable to the apparatus, the apparatus comprising:
a product classification database (10), configured to store, for each of a plurality of product classes represented in the database (10), a set of product data items indicative of attributes of products in that class;
an annotation database (8, 9) configured to store, for each of a plurality of annotations, a display condition dependent on one or more product data items in the product classification database (10); and
a controller (5) for receiving web page data retrieved from the Internet (3) in response to a web page request from the user station (2), the controller (5) being configured to
(a) analyze the web page data to select, in dependence on the subject matter of the data, at least one product class to which said subject matter relates from the product classes represented in the product classification database (10),
(b) retrieve from the product classification database (10) product data items associated with the or each product class selected in step (a),
(c) determined, for each of a group of said annotations, whether the associated display condition in the annotation database (8, 9) is satisfied by the product data items retrieved in step (b), and
(d) for each of a set of annotations for which the associated display condition is satisfied in step (c), supply annotation data indicative of the annotation for display at the user station (2) in association with the web page.

15. The apparatus of claim 14 wherein said annotation data comprises a link to the corresponding annotation.

16. The apparatus of claim 14 or claim 15 including an Internet access server (4) for retrieving web pages from the Internet (3) in response to web page requests from the user station (2), the server (4) being configured to supply said web page data to the controller (5) on retrieval of a web page from the Internet (3).

17. The apparatus of claim 14 wherein the controller (5) is configured to analyze the web page data by text-processing the data with reference to product data items in the product classification database (10).

18. The apparatus of claim 14 wherein said set of annotations comprises up to a predetermined maximum number of annotations, the controller (5) being configured to select the set of annotations from annotations for which the associated display condition is satisfied in step (c).

19. The apparatus of claim 14 wherein the controller (5) is configured to select said set of annotations, from annotations for which the associated display condition is satisfied in step (c), in a priority order according to a priority parameter associated with each annotation.

20. The apparatus of claim 19 for use where said plurality of annotations comprise information items from predetermined sources, wherein:
the apparatus includes a user database (7) for storing rating values, assigned by a user to respective said sources, in association with a user ID for that user; and
the controller (5) is configured such that, in selecting said set of annotations, the controller (5) determines, for each of said annotations for which the associated display condition is satisfied, the priority parameter associated with the annotation from the rating value assigned to the source of that annotation and stored in the user database (7) in association with a current user ID determined by communication from the user station (2).

21. The apparatus of claim 19 wherein said plurality of annotations comprise advertisements, said priority parameter associated with an annotation comprising a bid value defined in the annotation database (9) for that annotation and indicative of a price an advertiser offers for display of the advertisement, wherein the controller (5) is configured to select said set of annotations in order of decreasing price indicated by the bid values for annotations for which the associated display condition is satisfied in step (c).

22. The apparatus of claim 19 wherein the controller (5) is configured to perform steps (c) and (d) for each of first and second groups of annotations for which annotation conditions are stored in the annotation database (8, 9), wherein annotations in the first group comprise information items from predetermined sources and annotations in the second group comprise advertisements, and wherein:
the apparatus includes a user database (7) for storing rating values, assigned by a user to respective said sources, in association with a user ID for that user;
the controller (5) is configured such that, in selecting said set of annotations in step (d) for the first group, the controller (5) determines, for each of the annotations for which the associated display condition is satisfied in step (c) for the first group, the priority parameter associated with the annotation from the rating value assigned to the source of that annotation and stored in the user database (7) in association with a current user ID determined by communication from the user station (2);
the priority parameter associated with an annotation in the second group comprises a bid value defined in the annotation database (9) for that annotation and indicative of a price an advertiser offers for display of the advertisement; and
the controller (5) is configured to select said set of annotations in step (d) for the second group in order of decreasing price indicated by the bid values for annotations for which the associated display condition is satisfied in step (c) for the second group.

23. The apparatus of claim 14 including a URL database (12), wherein the controller (5) is configured such that:
after performing step (b), the controller (5) stores data identifying the or each selected product class, in association with the URL of the web page data, in the URL database (12); and
prior to performing step (b), the controller (5) checks whether the URL of the received web page data is stored in the URL database (12), and, if so, performs an alternative step (b) comprising selecting the or each product class identified in the URL database (12) in association with the URL of the received web page data.

24. A computer program product comprising computer program code means which, when loaded in a controller (5) of a data processing system (1), configures the controller (5) to perform a web page annotation method as claimed in claim 1.

## Patentansprüche

1. Verfahren zum Annotieren von Webseiten, die von einer Teilnehmereinheit (2) aus dem Internet (3) angefordert werden, wobei das Verfahren in einem Datenverarbeitungssystem (1), das mit der Teilnehmereinheit (2) verbunden werden kann, Folgendes umfasst:
(a) Empfangen von Webseitendaten, die aus dem Internet (3) in Reaktion auf eine Webseitenanforderung von der Teilnehmereinheit (2) abgerufen wurden;
(b) Untersuchen der Webseitendaten, um in Abhängigkeit von der Thematik der Daten wenigstens eine Produktklasse unter einer Vielzahl von Produktklassen auszuwählen, auf die sich die Thematik bezieht, wobei die Produktklassen in einer Produktklassifizierungs-Datenbank (10) des Systems (1) dargestellt werden, die für jede Produktklasse einen Satz von Produktdatenfeldern speichert, die Eigenschaften der Produkte in dieser Klasse anzeigen;
(c) Abrufen von Produktdatenfeldern aus der Produktklassifizierungs-Datenbank (10), wobei die Produktdatenfelder der einen oder jeder im Schritt (b) ausgewählten Produktklasse zugeordnet sind;
(d) für jede Annotation aus einer Menge von Annotationen Ermitteln, ob die zugehörige Anzeigebedingung von den im Schritt (c) abgerufenen Produktdatenfeldern erfüllt wird, wobei jede Annotation in dem System (1) einer Anzeigebedingung abhängig von einem oder mehreren Produktdatenfeldern in der Produktklassifizierungs-Datenbank (10) zugeordnet ist; und
(e) für jede Annotation aus einer Menge von Annotationen, für die die zugehörige Anzeigebedingung im Schritt (d) erfüllt wird, Zuliefern der Annotationsdaten, die der Teilnehmereinheit (2) die Annotation zur Anzeige zusammen mit der Webseite angeben.

2. Verfahren nach Anspruch 1, wobei die Annotationsdaten eine Datenverbindung zu der entsprechenden Annotation umfassen.

3. Verfahren nach Anspruch 1 oder 2, das vor dem Schritt (a) das Empfangen der von der Teilnehmereinheit (2) angeforderten Webseite und das Erlangen der Webseite aus dem Internet (3) zum Zuliefern an die Teilnehmereinheit (2) umfasst.

4. Verfahren nach Anspruch 1, wobei der Schritt (b) eine Textverarbeitung der Webseitendaten mit Bezug auf die Produktdatenfelder in der Produktklassifizierungs-Datenbank (10) umfasst, um wenigstens eine Produktklasse auszuwählen.

5. Verfahren nach Anspruch 1, wobei für wenigstens einige Annotationen aus der Menge die zugehörigen Darstellungsbedingungen zusätzlich von entsprechenden Sätzen weiterer in dem System (1) gespeicherter Datenfelder abhängen und wobei für jede solche Annotation der Schritt (d) das Ermitteln umfasst, ob die zugehörige Anzeigebedingung von den Produktdatenfeldern und dem entsprechenden Satz weiterer Datenfelder erfüllt wird.

6. Verfahren nach Anspruch 1, wobei die Annotationsmenge Annotationen bis zu einer vorher festgelegten Höchstanzahl umfasst.

7. Verfahren nach Anspruch 1, wobei der Schritt (e) das Auswählen der Annotationsmenge aus Annotationen umfasst, für die die zugehörige Anzeigebedingung im Schritt (d) erfüllt wird, und eine Prioritätsreihenfolge gemäß einem mit jeder Annotation verknüpften Prioritätsparameter beachtet wird.

8. Verfahren nach Anspruch 7, wobei:
die Annotationen Datenfelder von vorher festgelegten Quellen umfassen;
der einer Annotation zugeordnete Prioritätsparameter von einer Bewertungszahl abhängt, die von einem Teilnehmer der Annotationsquelle zugewiesen wird und in dem System (1) zusammen mit einer Kennung für diesen Teilnehmer vorher gespeichert wird; und
Schritt (e) für jede Annotation, für die die Anzeigebedingung erfüllt wird, das Ermitteln des der Annotation zugeordneten Prioritätsparameters aus der Bewertungszahl umfasst, die für die Quelle dieser Annotation zusammen mit einer aktuellen Teilnehmerkennung vorher gespeichert wurde, die durch einen Datenaustausch mit der Teilnehmereinheit (2) ermittelt wird.

9. Verfahren nach Anspruch 7, wobei:
die Annotationen Werbung umfassen;
der mit einer Annotation verknüpfte Prioritätsparameter einen Angebotswert umfasst, der in dem System (1) vorgegeben ist und einen Preis angibt, den ein Werber für die Anzeige der Werbung anbietet; und
Schritt (e) das Auswählen der Menge von Annotationen geordnet nach Preisen in absteigender Reihenfolge, umfasst, wie es die Angebotswerte für Annotationen anzeigen, für die die Anzeigebedingung im Schritt (d) erfüllt wird.

10. Verfahren nach Anspruch 7 einschließlich des Ausführens der Schritte (d) und (e) für jede erste und zweite Annotationsmenge, wobei:
Annotationen in der ersten Menge Datenfelder von vorher festgelegten Quellen umfassen, wobei der einer Annotation in der ersten Menge zugeordnete Prioritätsparameter von einer Bewertungszahl abhängt, die von einem Teilnehmer der Annotationsquelle zugewiesen wird und zusammen mit einer Teilnehmerkennung für diesen Teilnehmer vorher in dem System (1) gespeichert wird;
Schritt (e) bei der ersten Menge für jede Annotation, bei der die Anzeigebedingung im Schritt (d) erfüllt wird, das Ermitteln des der Annotation zugeordneten Prioritätsparameters aus der Bewertungszahl umfasst, die für die Quelle dieser Annotation zusammen mit einer momentanen Teilnehmerkennung vorher gespeichert wurde, die durch Datenaustausch mit der Teilnehmereinheit (2) ermittelt wird;
Annotationen in der zweiten Menge Werbung umfassen und der einer Annotation zugeordnete Prioritätsparameter in der zweiten Menge einen Angebotswert umfasst, der in dem System (1) vorgegeben ist und einen Preis angibt, den ein Werber für die Anzeige der Werbung anbietet; und
Schritt (e) für die zweite Menge das Auswählen der Annotationsmenge nach Preisen in absteigender Reihenfolge umfasst, der von den Angebotswerten für Annotationen in der zweiten Menge, für die die entsprechende Anzeigebedingung im Schritt (d) erfüllt wird, angegeben wird.

11. Verfahren nach Anspruch 1, das ferner die folgenden Schritte umfasst:
nach dem Schritt (b) das Speichern der Daten, die die eine oder jede ausgewählte Produktklasse kennzeichnen, zusammen mit der URL der Webseitendaten in einer URL-Datenbank (12) des Systems (1); und
vor dem Schritt (b) das Prüfen, ob die URL der empfangenen Webseitendaten in der URL-Datenbank (12) gespeichert ist, und in diesem Fall das Ausführen eines alternativen Schrittes (b), der das Auswählen der einen oder jeder Produktklasse umfasst, die in der URL-Datenbank (12) zusammen mit der URL der empfangenen Webseitendaten bezeichnet sind.

12. Verfahren nach Anspruch 1, wobei das Verfahren vor dem Ausführen des Schrittes (a) für eine erste Webseite ferner den Schritt des Erzeugens des Satzes von Produktdatenfeldern für jede Produktklasse und das Speichern der Produktdatenfelder in der Produktklassifizierungs-Datenbank (10) umfasst.

13. Verfahren nach Anspruch 1, wobei das Verfahren vor dem Ausführen des Schrittes (a) für eine erste Webseite ferner den Schritt des Erzeugens der Anzeigebedingungen, die den entsprechenden Annotationen zugeordnet sind, und das Speichern der Anzeigebedingungen in einer Annotationsdatenbank (8, 9) des Systems (1) umfasst.

14. Vorrichtung zum Annotieren von Webseiten, die aus dem Internet (3) von einer mit der Vorrichtung verbindbaren Teilnehmereinheit (2) angefordert werden, wobei die Vorrichtung Folgendes umfasst:
eine Produktklassifizierungs-Datenbank (10), die dazu geeignet ist, für jede Produktklasse aus einer Vielzahl von in der Datenbank (10) dargestellten Produktklassen, einen Satz von Produktdatenfeldern zu speichern, die Eigenschaften der Produkte in dieser Klasse anzeigen;
eine Annotationsdatenbank (8, 9), die dazu geeignet ist, für jede Annotation aus einer Vielzahl von Annotationen, eine Anzeigebedingung zu speichern, die von einem oder mehreren Produktdatenfeldern in der Produktklassifizierungs-Datenbank (10) abhängt; und
eine Steuereinheit (5) zum Empfangen von Webseitendaten, die aus dem Internet (3) in Reaktion auf eine Webseitenanforderung von einer Teilnehmereinheit (2) abgerufen wurden, wobei die Steuereinheit (5) dazu geeignet ist,
(a) die Webseitendaten zu untersuchen, um abhängig von der Thematik der Daten wenigstens eine Produktklasse aus den in der Produktklassifizierungsdatenbank (10) dargestellten Produktklassen auszuwählen, auf die sich die Thematik bezieht,
(b) Produktdatenfelder, die der einen oder jeder im Schritt (a) ausgewählten Produktklasse zugeordnet sind, aus der Produktklassifizierungs-Datenbank (10) abzurufen.
(c) für jede Annotation aus einer Annotationsmenge zu ermitteln, ob die zugehörige Anzeigebedingung in der Annotationsdatenbank (8, 9) von den Produktdatenfeldern erfüllt wird, die im Schritt (b) abgerufen wurden, und
(d) für jede Annotation aus einer Annotationsmenge, für die die zugehörige Anzeigebedingung im Schritt (c) erfüllt wird, Annotationsdaten zuzuliefern, die die Annotation für die Anzeige an der Teilnehmereinheit (2) in Verbindung mit der Webseite angeben.

15. Vorrichtung nach Anspruch 14, wobei die Annotationsdaten eine Verbindung zu der entsprechenden Annotation umfassen.

16. Vorrichtung nach Anspruch 14 oder 15, wobei die Vorrichtung einen Internet-Zugriffserver (4) zum Abrufen der Webseiten aus dem Internet (3) in Reaktion auf die Webseitenanforderungen von der Teilnehmereinheit (2) umfasst und der Server (4) zum Zuliefern der Webseitendaten an die Steuereinheit (5) beim Abrufen einer Webseite aus dem Internet (3) geeignet ist.

17. Vorrichtung nach Anspruch 14, wobei die Steuereinheit (5) zum Untersuchen von Webseitendaten mittels Textverarbeitung der Daten mit Bezug auf die Produktdatenfelder in der Produktklassifizierungs-Datenbank (10) geeignet ist.

18. Vorrichtung nach Anspruch 14, wobei die Annotationsmenge Annotationen bis zu einer vorher festgelegten Höchstanzahl umfasst und die Steuereinheit (5) dazu geeignet ist, die Annotationsmenge aus den Annotationen auszuwählen, für die die zugehörige Anzeigebedingung im Schritt (c) erfüllt wird.

19. Vorrichtung nach Anspruch 14, wobei die Steuereinheit (5) zum Auswählen der Annotationsmenge aus den Annotationen, für die die zugehörige Anzeigebedingung im Schritt (c) erfüllt wird, in einer Prioritätsreihenfolge gemäß einem jeder Annotation zugeordneten Prioritätsparameter geeignet ist.

20. Vorrichtung nach Anspruch 19 zur Verwendung, wenn die Vielzahl von Annotationen Datenfelder von vorher festgelegten Quellen umfasst, wobei:
die Vorrichtung eine Teilnehmerdatenbank (7) zum Speichern der Bewertungszahlen umfasst, die von einem Teilnehmer den entsprechenden Quellen zusammen mit einer Teilnehmeridentifikation für diesen Teilnehmer zugewiesen wurden; und
die Steuereinheit (5) so beschaffen ist, dass sie beim Auswählen der Annotationsmenge für jede Annotation, für die die zugehörige Anzeigebedingung erfüllt wird, den Prioritätsparameter, der der Annotation zugeordnet ist, aus der Bewertungszahl ermittelt, die der Quelle dieser Annotation zugewiesen und zusammen mit einer Teilnehmerkennung, die durch Datenaustausch mit der Teilnehmereinheit (2) ermittelt wurde, in der Teilnehmerdatenbank (7) gespeichert ist.

21. Vorrichtung nach Anspruch 19, wobei die Vielzahl von Annotationen Werbung und der einer Annotation zugeordnete Prioritätsparameter einen Angebotswert umfassen, der in der Annotationsdatenbank (9) für diese Annotation festgelegt wird und einen Preis angibt, den ein Werber für die Anzeige der Werbung anbietet, wobei die Steuereinheit (5) zum Auswählen der Annotationsmenge nach Preisen in absteigender Reihenfolge geeignet ist, der von den Angebotswerten für Annotationen angegeben wird, wobei für die Annotationen die zugehörige Anzeigebedingung im Schritt (c) erfüllt wird.

22. Vorrichtung nach Anspruch 19, wobei die Steuereinheit (5) zum Ausführen der Schritte (c) und (d) für jede erste und zweite Annotationsmenge geeignet ist, für die die Annotationsbedingungen in der Annotationsdatenbank (8, 9) gespeichert sind, und die Annotationen in der ersten Menge Datenfelder von vorher festgelegten Quellen und Annotationen in der zweiten Gruppe Werbung umfassen und wobei:
die Vorrichtung eine Teilnehmerdatenbank (7) zum Speichern der Bewertungsdaten umfasst, die von einem Teilnehmer an die entsprechenden Quellen zusammen mit einer Teilnehmeridentifikation für diesen Teilnehmer zugewiesen werden;
die Steuereinheit (5) so beschaffen ist, dass sie beim Auswählen der Annotationsmenge im Schritt (d) für die erste Menge für jede der Annotationen, für die die zugehörige Anzeigebedingung im Schritt (c) für die erste Menge erfüllt wird, den der Annotation zugeordneten Prioritätsparameter aus dem Bewertungsparameter ermittelt, der der Quelle dieser Annotation zugewiesen und in der Teilnehmerdatenbank (7) zusammen mit einer momentanen Teilnehmerkennung gespeichert wurde, die durch Datenaustausch mit der Teilnehmereinheit (2) ermittelt wurde;
der einer Annotation in der zweiten Menge zugeordnete Prioritätsparameter einen Angebotswert umfasst, der in der Annotationsdatenbank (9) für diese Annotation festgelegt wird und einen Preis angibt, den ein Werber für die Anzeige der Werbung anbietet; und
die Steuereinheit (5) dazu geeignet ist, die Annotationsmenge im Schritt (d) für die zweite Menge nach Preis in absteigender Reihenfolge auszuwählen, der von den Angebotswerten für die Annotationen angegeben wird, für die die zugehörige Anzeigebedingung im Schritt (c) für die zweite Menge erfüllt wird.

23. Vorrichtung nach Anspruch 14, wobei die Vorrichtung eine URL-Datenbank (12) umfasst und die Steuereinheit (5) so beschaffen ist, dass:
nach dem Ausführen von Schritt (b) die Steuereinheit (5) Daten, die die eine oder jede ausgewählte Produktklasse kennzeichnen, zusammen mit der URL der Webseitendaten in der URL-Datenbank (12) speichert; und
vor dem Ausführen von Schritt (b) die Steuereinheit (5) prüft, ob die URL der empfangenen Webseitendaten in der URL-Datenbank (12) gespeichert ist, und in diesem Fall einen alternativen Schritt (b) ausführt, der das Auswählen der einen oder jeder Produktklasse umfasst, die in der URL-Datenbank (12) zusammen mit der URL der empfangenen Webseitendaten bezeichnet sind.

24. Computerprogrammprodukt, das ein Computerprogramm-Codemittel umfasst, das, wenn es in eine Steuereinheit (5) in einem Datenverarbeitungssystem (1) geladen wird, die Steuereinheit (5) zum Ausführen eines Webseiten-Annotationsverfahren nach Anspruch 1 konfigurieren.

## Revendications

1. Procédé d'annotation de pages Web demandées à partir du système Internet (3) par une station d'utilisateur (2), le procédé comprenant, dans un système de traitement de données (1) pouvant être relié à la station d'utilisateur, les étapes consistant à :
(a) recevoir des données de page Web récupérées à partir du système Internet (3) en réponse à une demande de page Web provenant la station d'utilisateur (2),
(b) analyser les données de page Web pour sélectionner, en fonction de l'objet des données, au moins une classe de produits à laquelle ledit objet se rapporte parmi une pluralité de classes de produits représentées dans une base de données de classification de produits (10) du système (1), la base de données de classification de produits (10) mémorisant, pour chaque dite classe de produits, un ensemble d'éléments de données de produits indicatifs d'attributs de produits dans cette classe,
(c) récupérer à partir de la base de données de classification de produits (10) des éléments de données de produits associés à la ou à chaque classe de produits sélectionnée à l'étape (b),
(d) pour chaque annotation d'un groupe d'annotations, chacune associée dans le système (1) à une condition d'affichage dépendant d'un ou plusieurs éléments de données de produits dans la base de données de classification de produits (10), déterminer si la condition d'affichage associée est satisfaite par les éléments de données de produits récupérés à l'étape (c), et
(e) pour chaque annotation d'un ensemble d'annotations pour lesquelles la condition d'affichage associée est satisfaite à l'étape (d), fournir des données d'annotation indicatives de l'annotation à la station d'utilisateur (2) en vue de l'affichage en association avec la page Web.

2. Procédé selon la revendication 1, dans lequel lesdites données d'annotation comprennent un lien vers l'annotation correspondante.

3. Procédé selon la revendication 1 ou la revendication 2, comprenant, avant l'étape (a), les étapes consistant à recevoir la demande de page Web de la station d'utilisateur (2) et à obtenir la page Web à partir du système Internet (3) pour la fournir à la station d'utilisateur (2).

4. Procédé selon la revendication 1, dans lequel l'étape (b) comprend le traitement du texte des données de page Web en faisant référence aux éléments de données de produits dans la base de données de classification de produits (10) pour sélectionner ladite au moins une classe de produits.

5. Procédé selon la revendication 1, dans lequel, au moins pour certaines annotations dudit groupe, les conditions d'affichage associées dépendent en plus d'ensembles respectifs d'autres éléments de données mémorisés dans le système (1), et dans lequel, pour chaque telle annotation, l'étape (d) comprend l'étape consistant à déterminer si la condition d'affichage associée est satisfaite par lesdits éléments de données de produits et l'ensemble respectif d'autres éléments de données.

6. Procédé selon la revendication 1, dans lequel ledit ensemble d'annotations comprend jusqu'à un nombre prédéterminé maximal d'annotations.

7. Procédé selon la revendication 1, dans lequel l'étape (e) comprend l'étape consistant à sélectionner ledit ensemble, à partir d'annotations pour lesquelles la condition d'affichage associée est satisfaite à l'étape (d), dans un ordre de priorité en fonction d'un paramètre de priorité associé à chaque annotation.

8. Procédé selon la revendication 7, dans lequel :
les annotations comprennent des éléments d'informations provenant de sources prédéterminées,
le paramètre de priorité associé à une annotation dépend d'une valeur de notation, attribuée par un utilisateur à la source de l'annotation et mémorisée au préalable dans le système (1) en association avec un identificateur ID d'utilisateur de cet utilisateur, et
l'étape (e) comprend l'étape consistant à déterminer, pour chacune des annotations pour lesquelles la condition d'affichage associée est satisfaite, le paramètre de priorité associé à l'annotation à partir de la valeur de notation mémorisée au préalable pour la source de cette annotation en association avec un identificateur ID d'utilisateur actuel déterminé à partir d'une communication provenant de la station d'utilisateur (2).

9. Procédé selon la revendication 7, dans lequel :
les annotations comprennent des publicités,
le paramètre de priorité associé à une annotation comprend une valeur d'offre définie dans le système (1) et indicative d'un prix qu'un annonceur publicitaire offre pour l'affichage de la publicité, et
l'étape (e) comprend l'étape consistant à sélectionner ledit ensemble d'annotations dans l'ordre du prix décroissant indiqué par les valeurs d'offres des annotations pour lesquelles la condition d'affichage associée est satisfaite à l'étape (d).

10. Procédé selon la revendication 7, comprenant l'étape consistant à exécuter les étapes (d) et (e) pour chaque annotation d'un premier et d'un deuxième groupes d'annotations, dans lequel :
les annotations dans le premier groupe comprennent des éléments d'information provenant de sources prédéterminées, ledit paramètre de priorité associé à une annotation dans le premier groupe dépendant d'une valeur de notation, attribuée par un utilisateur à la source de l'annotation et mémorisée au préalable dans le système (1) en association avec un identificateur ID d'utilisateur de cet utilisateur,
l'étape (e) pour le premier groupe comprend l'étape consistant à déterminer, pour chacune des annotations pour lesquelles la condition d'affichage associée est satisfaite à l'étape (d), le paramètre de priorité associé à l'annotation à partir de la valeur de notation mémorisée au préalable pour la source de cette annotation avec un identificateur ID d'utilisateur actuel déterminé à partir d'une communication provenant de la station d'utilisateur (2),
les annotations dans le deuxième groupe comprennent des publicités, ledit paramètre de priorité associé à une annotation dans le deuxième groupe comprenant une valeur d'offre définie dans le système (1) et indicative d'un prix qu'un annonceur publicitaire offre pour l'affichage de la publicité, et
l'étape (e) pour le deuxième groupe comprend l'étape consistant à sélectionner ledit ensemble d'annotations dans l'ordre du prix décroissant indiqué par les valeurs d'offres des annotations dans le deuxième groupe pour lesquelles la condition d'affichage associée est satisfaite à l'étape (d).

11. Procédé selon la revendication 1, comprenant en outre les étapes consistant à :
après l'étape (b), mémoriser des données identifiant la ou chaque classe de produits sélectionnée, en association avec le localisateur URL des données de page Web, dans une base de données de localisateurs URL (12) du système (1), et
avant l'étape (b), vérifier si le localisateur URL des données de page Web reçues est mémorisé dans la base de données de localisateurs URL (12), et, si cela est le cas, exécuter une autre étape (b) comprenant la sélection de la ou chaque classe de produits identifiée dans la base de données de localisateurs URL (12) en association avec le localisateur URL des données de page Web reçues.

12. Procédé selon la revendication 1, comprenant en outre, avant d'exécuter l'étape (a) pour une première page Web, l'étape consistant à générer l'ensemble d'éléments de données de produits pour chaque dite classe de produits et à mémoriser les éléments de données de produits dans la base de données de classification de produits (10).

13. Procédé selon la revendication 1, comprenant en outre, avant d'exécuter l'étape (a) pour une première page Web, l'étape consistant à générer les conditions d'affichage associées auxdites annotations respectives, et à mémoriser les conditions d'affichage dans une base de données d'annotations (8, 9) du système (1).

14. Dispositif d'annotation de pages Web demandées à partir du système Internet (3) par une station d'utilisateur (2) pouvant être reliée au dispositif, le dispositif comprenant :
une base de données de classification de produits (10) configurée pour mémoriser, pour chaque classe parmi une pluralité de classes de produits représentées dans la base de données, un ensemble d'éléments de données de produits indicatifs d'attributs de produits dans cette classe,
une base de données d'annotations (8, 9) configurée pour mémoriser, pour chaque annotation parmi une pluralité d'annotations, une condition d'affichage dépendant d'un ou plusieurs éléments de données de produits dans la base de données de classification de produits (10), et
un contrôleur (5) destiné à recevoir des données de page Web récupérées à partir du système Internet (3) en réponse à une demande de page Web provenant de la station d'utilisateur (2), le contrôleur (5) étant configuré pour
(a) analyser les données de page Web pour sélectionner, en fonction de l'objet des données, au moins une classe de produits à laquelle ledit objet se rapporte parmi les classes de produits représentées dans la base de données de classification de produits (10),
(b) récupérer à partir de la base de données de classification de produits (10) des éléments de données de produits associés à la ou à chaque classe de produits sélectionnée à l'étape (a),
(c) déterminer, pour chaque annotation d'un groupe desdites annotations, si la condition d'affichage associée dans la base de données d'annotations (8, 9) est satisfaite par les éléments de données de produits récupérés à l'étape (b), et
(d) pour chaque annotation d'un ensemble d'annotations pour lesquelles la condition d'affichage associée est satisfaite à l'étape (c), fournir des données d'annotation indicatives de l'annotation en vue de l'affichage au niveau de la station d'utilisateur (2) en association avec la page web.

15. Dispositif selon la revendication 14, dans lequel lesdites données d'annotation comprennent un lien vers l'annotation correspondante.

16. Dispositif selon la revendication 14 ou la revendication 15, comprenant un serveur d'accès Internet (4) destiné à récupérer des pages Web à partir du système Internet (3) en réponse à des demandes de pages Web provenant de la station d'utilisateur (2), le serveur (4) étant configuré pour fournir lesdites données de pages Web au contrôleur au moment de la récupération d'une page Web à partir du système Internet (3).

17. Dispositif selon la revendication 14, dans lequel le contrôleur (5) est configuré pour analyser les données de page Web par un traitement du texte des données en faisant référence aux éléments de données de produits dans la base de données de classification de produits (10).

18. Dispositif selon la revendication 14, dans lequel ledit ensemble d'annotations comprend jusqu'à un nombre prédéterminé maximal d'annotations, le contrôleur (5) étant configuré pour sélectionner l'ensemble d'annotations à partir d'annotations pour lesquelles la condition d'affichage associée est satisfaite à l'étape (c).

19. Dispositif selon la revendication 14, dans lequel le contrôleur (5) est configuré pour sélectionner ledit ensemble d'annotations, à partir d'annotations pour lesquelles la condition d'affichage associée est satisfaite à l'étape (c), dans un ordre de priorité en fonction d'un paramètre de priorité associé à chaque annotation.

20. Dispositif selon la revendication 19 à utiliser lorsque ladite pluralité d'annotations comprennent des éléments d'information provenant de sources prédéterminées, où :
le dispositif comprend une base de données d'utilisateur (7) destinée à mémoriser des valeurs de notation, attribuées par un utilisateur auxdites sources respectives, en association avec un identificateur ID d'utilisateur de cet utilisateur, et
le contrôleur (5) est configuré de sorte que, lors de la sélection dudit ensemble d'annotations, le contrôleur (5) détermine, pour chacune desdites annotations pour lesquelles la condition d'affichage associée est satisfaite, le paramètre de priorité associé à l'annotation à partir de la valeur de notation attribuée à la source de cette annotation et mémorisée dans la base de données d'utilisateur (7) en association avec un identificateur ID d'utilisateur actuel déterminé à partir d'une communication provenant de la station d'utilisateur (2).

21. Dispositif selon la revendication 19, dans lequel ladite pluralité d'annotations comprennent des publicités, ledit paramètre de priorité associé à une annotation comprenant une valeur d'offre définie dans la base de données d'annotations (9) pour cette annotation et indicative d'un prix qu'un annonceur publicitaire offre pour l'affichage de la publicité, dans lequel le contrôleur (5) est configuré pour sélectionner ledit ensemble d'annotations dans l'ordre du prix décroissant indiqué par les valeurs d'offres des annotations pour lesquelles la condition d'affichage associée est satisfaite à l'étape (c).

22. Dispositif selon la revendication 19 dans lequel le contrôleur (5) est configuré pour exécuter les étapes (c) et (d) pour chaque annotation d'un premier et d'un deuxième groupes d'annotations pour lesquelles des conditions d'annotations sont mémorisées dans la base de données d'annotations (8, 9), dans lequel les annotations dans le premier groupe comprennent des éléments d'information provenant de sources prédéterminées et les annotations dans le deuxième groupe comprennent des publicités, et où :
le dispositif comprend une base de données d'utilisateur (7) destinée à mémoriser des valeurs de notation, attribuées par un utilisateur auxdites sources respectives, en association avec un identificateur ID d'utilisateur de cet utilisateur,
le contrôleur (5) est configuré de sorte que, lors de la sélection dudit ensemble d'annotations à l'étape (d) pour le premier groupe, le contrôleur (5) détermine, pour chacune des annotations pour lesquelles la condition d'affichage associée est satisfaite à l'étape (c) pour le premier groupe, le paramètre de priorité associé à l'annotation à partir de la valeur de notation attribuée à la source de cette annotation et mémorisée dans la base de données d'utilisateur (7) en association avec un identificateur ID d'utilisateur actuel déterminé à partir d'une communication provenant de la station d'utilisateur (2),
le paramètre de priorité associé à une annotation dans le deuxième groupe comprend une valeur d'offre définie dans la base de données d'annotations (9) pour cette annotation et indicative d'un prix qu'un annonceur publicitaire offre pour l'affichage de la publicité, et
le contrôleur (5) est configuré pour sélectionner ledit ensemble d'annotations à l'étape (d) pour le deuxième groupe dans l'ordre du prix décroissant indiqué par les valeurs d'offres des annotations pour lesquelles la condition d'affichage associée est satisfaite à l'étape (c) pour le deuxième groupe.

23. Dispositif selon la revendication 14, comprenant une base de données de localisateurs URL (12), dans lequel le contrôleur (5) est configuré de sorte que :
après l'exécution de l'étape (b), le contrôleur (5) mémorise des données identifiant la ou chaque classe de produits sélectionnée, en association avec le localisateur URL des données de page Web, dans la base de données de localisateurs URL (12), et
avant l'exécution de l'étape (b), le contrôleur (5) vérifie si le localisateur URL des données de page Web reçues est mémorisé dans la base de données de localisateurs URL (12), et, si cela est le cas, exécute une autre étape (b) comprenant la sélection de la ou chaque classe de produits identifiée dans la base de données de localisateurs URL (12) en association avec le localisateur URL des données de page Web reçues.

24. Produit de programme informatique comprenant un moyen de code de programme qui, lorsqu'il est chargé dans un contrôleur (5) d'un système de traitement de données (1), configure le contrôleur (5) pour exécuter un procédé d'annotation de page Web selon la revendication 1.
